# EUROPEAN PATENT SPECIFICATION

(11) **EP 3 281 849 B1**
(45) Date of publication and mention of the grant of the patent: **17.06.2020**
(21) Application number: 17185460.7
(22) Date of filing: 09.08.2017
(51) Int. Cl.: B62H 1/02, B62J 25/00

(54) **SIDESTAND STRUCTURE IN TWO-WHEELED MOTOR VEHICLE**
SEITENSTÄNDERSTRUKTUR IN ZWEIRÄDRIGEM KRAFTFAHRZEUG
STRUCTURE À BÉQUILLE DANS UN DEUX ROUES À MOTEUR

(30) Priority: 10.08.2016 JP 2016157584; 05.06.2017 JP 2017111012
(43) Date of publication of application: 14.02.2018
(73) Proprietor: HONDA MOTOR CO., LTD., Tokyo 107-8556 (JP)
(72) Inventor: Tada, Masashi, Saitama, 351-0193 (JP); Tokuda, Yoshihito, Saitama, 351-0193 (JP); Asano, Tatsuhiko, Saitama, 351-0193 (JP); Noguchi, Yuji, Saitama, 351-0193 (JP); Horikawa, Haruki, Saitama, 351-0193 (JP)
(74) Representative: Beder, Jens

(56) References cited:
- EP-A1- 2 860 385
- US-A- 5 507 200

## Description

### BACKGROUND OF THE INVENTION

### FIELD OF THE INVENTION

The present invention relates to a two-wheeled motor vehicle, in which part of a body frame is configured with: a head pipe steerably supporting a steering handlebar; a pair of left and right main frames extending rearward from the head pipe; and a pair of left and right pivot frames connected to rear end portions of the main frames, the pivot frames extending in an up-down direction, a front portion of a swing arm is located inward of the paired left and right pivot frames in a vehicle width direction and swingably supported through a pivot on lower portions of the left and right pivot frames, a rear end portion of the swing arm pivotally supporting a rear wheel, a step holder located under the pivot is abuttingly fixed on an outer surface of the lower portion of each of the paired left and right pivot frames while supporting a step, the step protruding outward from the step holder in a state of use, a sidestand is located either left or right of the body frame, the sidestand being rotatable between a usage position enabling contact of the sidestand with a ground and a retracted position where the sidestand is swung up rearward from the usage position in a vehicle longitudinal direction so as to be retracted, and a coil-shaped spring is provided between the sidestand and a spring lock portion fixedly located on the body frame side. The present invention relates especially to an improvement of a sidestand structure.

### DESCRIPTION OF THE RELATED ART

A two-wheeled motor vehicle disclosed in Japanese Patent Application Laid-Open No. 2001-71957 or in EP 2 860 385 A1, which discloses the features of the preamble of claim 1, is known in which in a body frame, a front portion of a swing arm is swingably supported on a pivot frame and a sidestand bracket is fixed on the pivot frame. The pivot frame connects a rear portion of a main frame and a rear portion of a down frame, a rear portion of the swing arm pivotally supports a rear wheel and the sidestand bracket includes a sidestand support portion and a spring lock portion.

### SUMMARY OF THE INVENTION

However, in the two-wheeled motor vehicle disclosed in Japanese Patent Application Laid-Open No. 2001-71957, the spring lock portion is located in a position to protrude outward of an outer surface of the pivot frame, so in order to prevent a step from interfering with the sidestand support portion and the spring lock portion, they must be spaced from each other, thus making it necessary to provide a large space in which the step, the sidestand support portion, and the spring lock portion are arranged.

The present invention has been achieved in view of the above-mentioned circumstances, and it is an object thereof to provide a two-wheeled motor vehicle with a sidestand structure which prevents the space to arrange the step, sidestand support portion and spring lock portion from being large.

In order to achieve the object, according to a first feature of the present invention, there is provided a two-wheeled motor vehicle with a sidestand structure, in which part of a body frame is configured with: a head pipe steerably supporting a steering handlebar; a pair of left and right main frames extending rearward from the head pipe; and a pair of left and right pivot frames connected to rear end portions of the main frames, the pivot frames extending in an up-down direction, a front portion of a swing arm is located inward of the paired left and right pivot frames in a vehicle width direction and swingably supported through a pivot on lower portions of the left and right pivot frames, a rear end portion of the swing arm pivotally supporting a rear wheel, a step holder located under the pivot is abuttingly fixed on an outer surface of the lower portion of each of the paired left and right pivot frames while supporting a step, the step protruding outward from the step holder in a state of use, a sidestand is located either left or right of the body frame, the sidestand being rotatable between a usage position enabling contact of the sidestand with a ground and a retracted position where the sidestand is swung up rearward from the usage position in a vehicle longitudinal direction so as to be retracted, and a coil-shaped spring is provided between the sidestand and a spring lock portion fixedly located on the body frame side, characterized in that the step holder located either left or right of the body frame has a sidestand support portion rotatably supporting the sidestand and the spring lock portion located above the sidestand support portion, and the spring lock portion is located in a position to overlap the pivot frame when viewed from back in the vehicle longitudinal direction and at least partially overlap the swing arm as seen in a side view.

According to a second feature of the present invention, in addition to the first feature, the pivot frame is formed to extend up and down with an intermediate portion thereof in an up-down direction curved rearward in a convex manner, the sidestand is rotatably supported on the sidestand support portion through a support shaft, and the support shaft and the spring lock portion are located on a portion of the step holder protruding rearward of the lower portion of the pivot frame and located forward of a rear end of the pivot frame as seen in the side view.

According to a third feature of the present invention, in addition to the second feature, the step holder integrally includes an arm portion extending upward from the sidestand support portion, the spring lock portion is located at a tip end portion of the arm portion so that at least part of the spring lock portion is located above an upper end of the step in the state of use, and the support shaft is located in a position corresponding to a lower end of the step in the state of use as seen in the side view.

According to a fourth feature of the present invention, in addition to the third feature, a posture of the sidestand in the retracted position is set so as to make an angle of substantially 45 degrees with respect to a horizontal line.

According to a fifth feature of the present invention, in addition to the fourth feature, a position of the spring lock portion is determined so that with the sidestand in the usage position, at least part of the spring overlaps the sidestand as seen in the side view.

According to a sixth feature of the present invention, in addition to the fifth feature, the position of the spring lock portion is determined so that with the sidestand in the usage position, the spring passes forward of the support shaft as seen in the side view.

According to a seventh feature of the present invention, in addition to any one of the first feature to the sixth feature, the sidestand includes a stand bar and a grounding portion, the stand bar having one end portion rotatably supported on the sidestand support portion, the grounding portion capable of contacting a ground and being located at an opposite end portion of the stand bar, and a lightening concave portion is formed in a side surface of the stand bar facing downward in the retracted position.

According to an eighth feature of the present invention, in addition to the seventh feature, a grounding surface of the grounding portion is spherically formed.

According to a ninth feature of the present invention, in addition to the first feature, the step holder includes a sidestand switch attached thereto, the sidestand switch changing a switching mode between a state with the sidestand placed in the usage position and a state with the sidestand placed in the retracted position, and at least one of the step holder and the pivot frame includes a conductor wire guide portion arranging a conductor wire connected to the sidestand switch inward of the spring lock portion in the vehicle width direction.

According to a tenth feature of the present invention, in addition to the ninth feature, the pivot frame is formed to extend up and down and have, in an intermediate portion thereof in an up-down direction, a curved portion curved rearward in a convex manner, and the sidestand switch and the spring lock portion are located in a position to overlap the curved portion at least partially when viewed from above.

With the first feature of the present invention, the front portion of the swing arm is located inward of the left and right pivot frames in the vehicle width direction, so when the spring lock portion located on the step holder together with the sidestand support portion overlaps the swing arm at least partially as seen in a side view, the space generated laterally to the front portion of the swing arm can be effectively used to arrange the sidestand support portion and the spring lock portion rearward of the pivot frame and laterally to the swing arm. Thus, even though the step, the sidestand support portion, and the spring lock portion are located adjacently to each other as seen in the side view, the step and, the sidestand support portion and the spring lock portion can be made not to interfere with each other and the space to arrange the step, the sidestand support portion, and the spring lock portion can be prevented from being large.

With the second feature of the present invention, the support shaft supporting the sidestand on the sidestand support portion, and the spring lock portion are located forward of the rear end of the pivot frame as seen in the side view and located on a portion of the step holder protruding rearward of a lower portion of the pivot frame. This prevents the step holder from being large and makes it possible to use the space under the pivot frame effectively.

With the third feature of the present invention, the spring lock portion is located at the tip end portion of the arm portion extending from the sidestand support portion in a manner that at least part of the spring lock portion is above the upper end of the step in the state of use, and the support shaft is located in a position corresponding to the lower end of the step in the state of use as seen in the side view. Therefore, the support shaft and the spring lock portion can be spaced from each other in the up-down direction without an increase in the weight of the step holder and thereby the spring force of the spring to rotate the sidestand so as to move it into the retracted position can be increased to decrease the manipulation force and also the retracted position of the sidestand can be maintained properly.

With the fourth feature of the present invention, in the retracted position the posture of the sidestand is set so as to make an angle of substantially 45 degrees with respect to the horizontal line, so the force to rotate and bias the sidestand toward the opposite of the usage position can be increased and the retracted position of the sidestand can be maintained more properly.

With the fifth feature of the present invention, in the usage position at least part of the spring overlaps the sidestand as seen in the side view so that the appearance can be improved and also expansion of the spring can be reduced to improve the durability of the spring.

With the sixth feature of the present invention, when the sidestand is in the usage position, the spring passes forward of the center of rotation of the sidestand as seen in the side view, so the possibility that the sidestand rotates and moves into the retracted position with the sidestand in contact with the ground can be effectively suppressed.

With the seventh feature of the present invention, the lightening concave portion is formed in the side surface of the stand bar of the sidestand, so the weight of the sidestand can be decreased. Furthermore, the lightening concave portion is formed in a portion of the side surface of the stand bar which faces downward in the retracted position, so accumulation of mud, etc. in the lightening concave portion can be prevented.

With the eighth feature of the present invention, the grounding surface of the grounding portion of the sidestand is spherically formed, so stability upon contact with an uneven terrain can be ensured and also the invention can be applied to a two-wheeled motor vehicle which has a different parking angle in parking with the sidestand in the usage position and thus versatility is increased.

With the ninth feature of the present invention, the conductor wire connected with the sidestand switch attached to the step holder is arranged by the conductor wire guide portions inward of the spring lock portion in the vehicle width direction, so it is easy to arrange the conductor wire extending from the sidestand switch to make it pass inward of the spring lock portion in the vehicle width direction and inward of the pivot frame in the vehicle width direction.

With the tenth feature of the present invention, the sidestand switch and the spring lock portion at least partially overlap the curved portion in the intermediate portion in the up-down direction of the pivot frame when viewed from above, so the sidestand switch and the spring lock portion can be placed around the pivot frame in a compact manner.

### BRIEF DESCRIPTION OF THE DRAWINGS

FIG. 1 is a side view of a two-wheeled motor vehicle according to a first embodiment.
FIG. 2 is an enlarged view of an essential part of FIG. 1 with a sidestand in a usage position.
FIG. 3 is a side view corresponding to FIG. 2 with the sidestand in a retracted position.
FIG. 4 is a sectional view taken along the line 4-4 of FIG. 2.
FIG. 5 is a sectional view taken along the line 5-5 of FIG. 3.
FIG. 6 is a sectional view taken along the line 6-6 of FIG. 2.
FIG. 7 is a sectional view taken along the line 7-7 of FIG. 6.
FIG. 8 is a side view of a two-wheeled motor vehicle according to a second embodiment.
FIG. 9 is an enlarged view of an essential part of FIG. 8 with the sidestand in the usage position.
FIG. 10 is a sectional view taken along the line 10-10 of FIG. 9.
FIG. 11 is a sectional view taken along the line 11-11 of FIG. 10.

### DESCRIPTION OF THE PREFERRED EMBODIMENTS

Embodiments of the present invention will be described referring to the accompanying drawings. In the description below, up/down, front/back, and left/right are directions as seen by an occupant riding the two-wheeled motor vehicle.

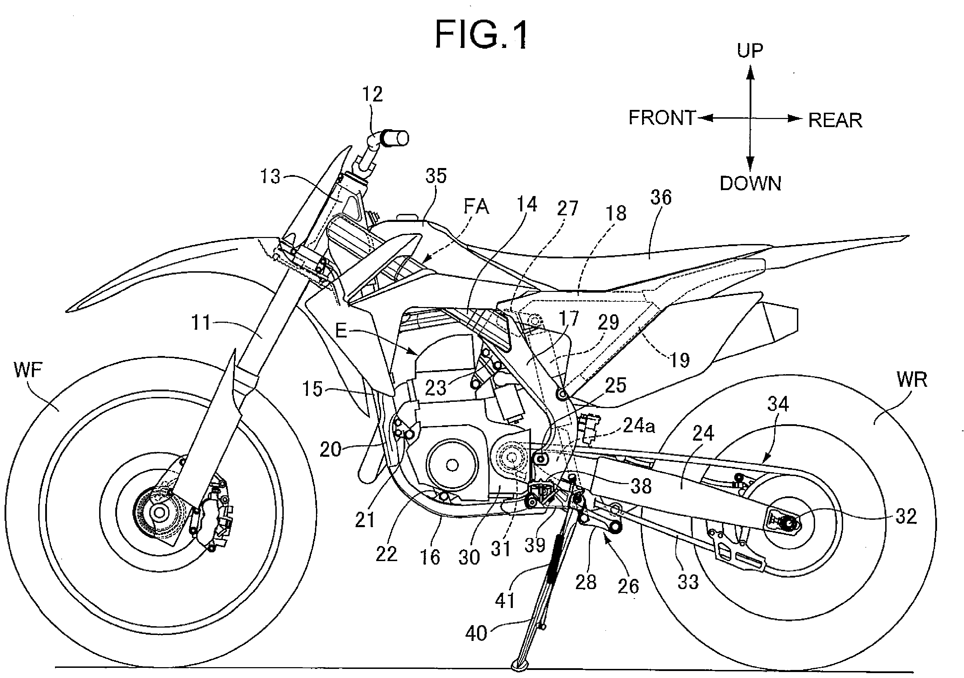

Next, a first embodiment of the present invention will be described referring to FIGS. 1 to 7. As shown in FIG. 1, a body frame FA of the two-wheeled motor vehicle includes: a head pipe 13 which steerably supports a front fork 11 and a bar-shaped steering handlebar 12, the front fork 11 pivotally supporting a front wheel WF; a pair of left and right main frames 14 extending from the head pipe 13 downward toward the rear; a down frame 15 extending from the head pipe 13 downward toward the rear with a sharper angle than the main frames 14; a pair of left and right lower frames 16 connected to a lower end portion of the down frame 15 through a joint 20, the lower frames 16 extending rearward; a pair of left and right pivot frames 17 connecting rear end portions of the main frames 14 and rear end portions of the lower frames 16, the pivot frames 17 extending up and down; a pair of left and right seat rails 18 extending rearward from upper end portions of the pivot frames 17; and a pair of left and right rear frames 19 connecting intermediate portions in the up-down direction of the left and right pivot frames 17 and intermediate portions in the front-rear direction of the seat rails 18.

The pivot frames 17 are formed in a manner to extend up and down with the intermediate portions thereof in the up-down direction curved rearward in a convex manner and front portions of the rear frames 19 are connected to the intermediate portions in the up-down direction.

An engine E is provided in a space surrounded by the main frames 14, the down frame 15, the joint 20, the lower frames 16, and the pivot frames 17, and a front portion of the engine E is supported by the joint 20 through a first engine hanger 21, a lower portion of the engine E is supported by a second engine hanger 22 provided on the lower frames 16, and an upper portion of the engine E is supported on upper portions of the pivot frames 17 through a third engine hanger 23.

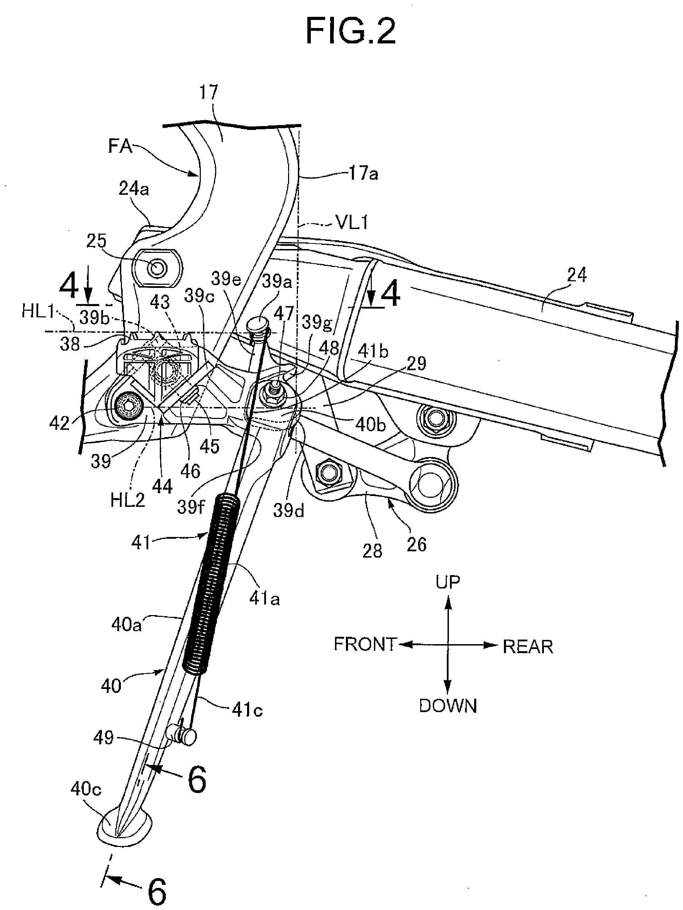

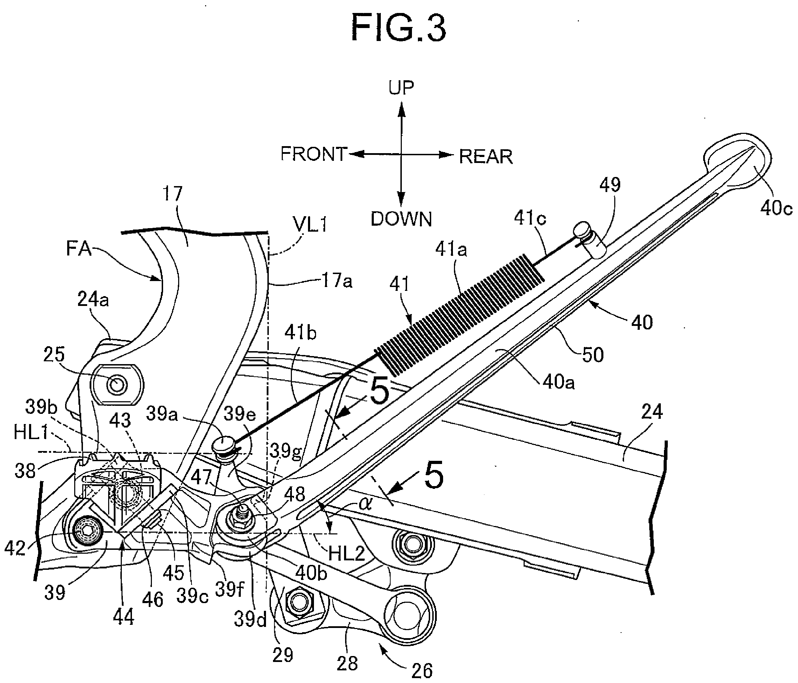

Referring also to FIGS. 2 and 3, a front portion 24a of a swing arm 24 is supported on the lower portions of the paired left and right pivot frames 17 through a pivot 25 in an up-down swingable manner, in which a rear end portion of the swing arm 24 pivotally supports the rear wheel WR. A link mechanism 26 is provided between a lower cross member (not shown) and the swing arm 24, in which the lower cross member connects the lower end portions of the paired left and right pivot frames 17. A cushion unit 29 is provided between an upper cross member 27 and a link member 28, in which the upper cross member 27 connects the front end portions of the seat rails 18 and the link member 28 constitutes part of the link mechanism 26.

A crankcase 30 provided in the engine E houses a transmission (not shown). An output shaft 31 of the transmission protrudes leftward from the crankcase 30 and a transmission means 34 which uses an endless chain 33 is provided between the output shaft 31 and an axle 32 of the rear wheel WR.

A fuel tank 35 is provided above the engine E and on the main frames 14 and a riding seat 36 is provided rearward of the fuel tank 35 in a manner to be supported by the seat rails 18.

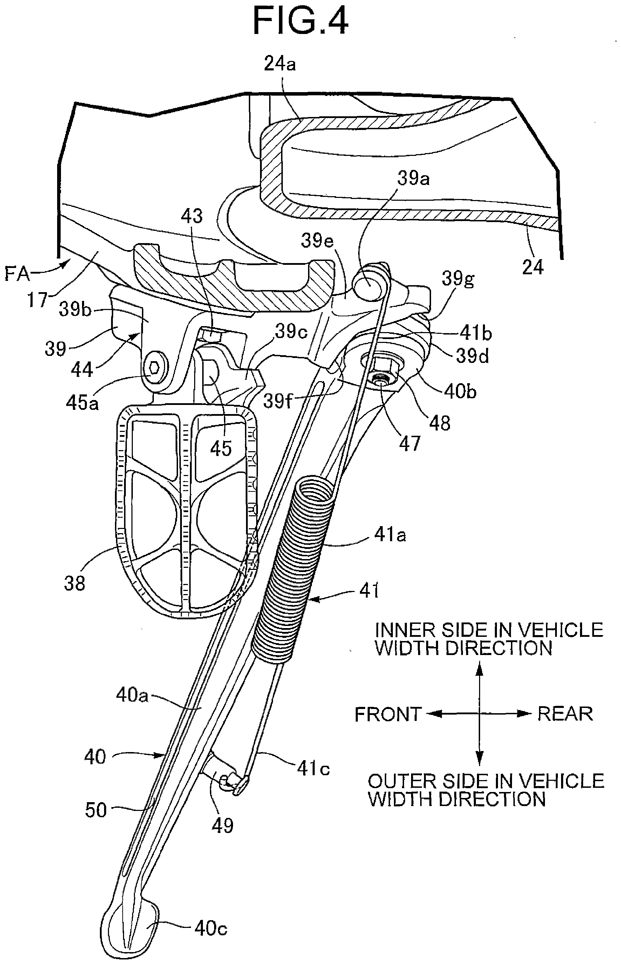

Referring also to FIG. 4, the front portion 24a of the swing arm 24 is concaved inward in the vehicle width direction in a manner to be located inward of the paired left and right pivot frames 17 in the vehicle width direction and the front portion 24a is swingably supported on the lower portions of the paired left and right pivot frames 17 through the pivot 25.

A step holder 39 is abuttingly fixed on the outer surface of the lower portion of each of the left and right pivot frames 17, in which the step holder 39 supports a step 38 and is located under the pivot 25. A sidestand 40 is provided on one of the left and right sides of the body frame FA, on the left side in this embodiment, in which the sidestand 40 can rotate between a usage position (position shown in FIG. 2) to permit contact thereof with the ground and a retracted position (position shown in FIG. 3) where the sidestand 40 is swung up rearward from the usage position in the vehicle longitudinal direction so as to be retracted. A coil-shaped spring 41 is provided between the sidestand 40 and a spring lock portion 39a fixedly located on the body frame FA side.

The step holder 39 is abuttingly fixed on the outer surface of the lower portion of the pivot frame 17 with a first bolt 42 and a second bolt 43 spaced rearward from the first bolt 42. The step holder 39 includes a step support portion 44 which rotatably supports the step 38. The step support portion 44 includes a first support protruding portion 39b and a second support protruding portion 39c, in which the first support protruding portion 39b is located obliquely upward and forward of the first bolt 42 and protruded integrally with the step holder 39 and the second support protruding portion 39c is protruded integrally with the step holder 39 in a manner to sandwich the second bolt 43 between the first support protruding portion 39b and the second support protruding portion 39c. The first and second support protruding portions 39b and 39c are parallel to each other and protrude outward of the step holder 39.

The step 38 is rotatably supported on the step support portion 44 through a first support bolt 45 and the step 38 can rotate between a protruding position and a folded position, in which the protruding position is a position where the step 38 protrudes outward from the step holder 39 in the state of use with a rider foot resting on the step 38 and the folded position is a position where the step 38 is adjacent to the step holder 39. The first support bolt 45 is inserted through the first support protruding portion 39b and the second support protruding portion 39c so that an expanded-diameter head 45a of the first support bolt 45 abuts against and engages with an upper surface of the first support protruding portion 39b. A nut 46 abuts against and engages with the lower surface of the second support protruding portion 39c, in which the nut 46 is screwed with a portion of the first support bolt 45 protruding downward from the second support protruding portion 39c.

The sidestand 40 is rotatably supported on one of the paired left and right step holders 39, namely the step holder 39 located on the left side of the body frame FA. A sidestand support portion 39d and the spring lock portion 39a are provided on a portion of the left step holder 39 protruding rearward of the lower portion of the pivot frame 17, in which the sidestand support portion 39d rotatably supports the sidestand 40 and the spring lock portion 39a is located above the sidestand support portion 39d.

The spring lock portion 39a is located in a position to overlap the pivot frame 17 as viewed from the rear in the vehicle longitudinal direction as illustrated in FIG. 4 and overlap the swing arm 24 at least partially (mostly in this embodiment) as seen in a side view as illustrated in FIGS. 2 and 3. In addition, at least part of (in this embodiment, most of) the spring lock portion 39a is located above the upper end of the step 38 in the state of use as shown in FIGS. 2 and 3 and as seen in the side view, most of the spring lock portion 39a is located above a first horizontal line HL1 passing the upper end of the step 38.

The sidestand support portion 39d is formed in a flat plate shape protruding rearward under the spring lock portion 39a. An arm portion 39e extending upward from the sidestand support portion 39d is provided integrally on the left step holder 39 and the spring lock portion 39a is located at the tip end portion of the arm portion 39e.

The sidestand 40 is formed to have a stand bar 40a and a grounding portion 40c integrally, in which the stand bar 40a has a supported portion 40b rotatably supported by the sidestand support portion 39d at one end portion of the stand bar 40a and the grounding portion 40c can contact the ground and is located at the opposite end portion of the stand bar 40a. The supported portion 40b, which is formed in a bifurcated form so as to sandwich the sidestand support portion 39d from opposite sides, is rotatably supported on the sidestand support portion 39d through a second support bolt 47 as a support shaft.

The second support bolt 47 is inserted through the supported portion 40b and the sidestand support portion 39d with its expanded-diameter head (not shown) abutting against and engaging with an outer surface of the supported portion 40b which faces inward in the vehicle width direction. A nut 48 is screwed with a portion of the second support bolt 47 protruding from an outer surface of the supported portion 40b which faces outward in the vehicle width direction.

In order to enable the grounding portion 40c to contact the ground stably when the two-wheeled motor vehicle is parked with its body inclined to the left, the axis of the second support bolt 47 is inclined so that when the two-wheeled motor vehicle is upright, the axis is in a more upward position in a more outward area in the vehicle width direction.

Furthermore, the second support bolt 47 and the spring lock portion 39a are located forward of a rear end 17a of the pivot frame 17 as seen in the side view. In other words, the sidestand support portion 39d and the spring lock portion 39a are located forward of a first vertical line VL1 passing the rear end 17a of the pivot frame 17 as seen in the side view. In addition, as illustrated in FIGS. 2 and 3, the second support bolt 47 is located in a position corresponding to the lower end of the step 38 in the state of use as seen in the side view and a second horizontal line HL2 passing the lower end of the step 38 as seen in the side view passes the second support bolt 47.

The spring 41 includes: a coil portion 41a; a first coupling portion 41b extending linearly from one end of the coil portion 41a; and a second coupling portion 41c extending linearly from the other end of the coil portion 41a. The tip end portion of the first coupling portion 41b is locked onto the spring lock portion 39a and the tip end portion of the second coupling portion 41c is locked onto a lock shaft 49 provided near the grounding portion 40c of the stand bar 40a.

In the vicinity of the sidestand support portion 39d, the left step holder 39 includes a usage position side stopper 39f and a retracted position side stopper 39g, in which the usage position side stopper 39f abuts against one end portion of the stand bar 40a with the sidestand 40 in the usage position so as to determine the usage position of the sidestand 40 as shown in FIG. 2, and the retracted position side stopper 39g abuts against the one end portion of the stand bar 40a with the sidestand 40 in the retracted position so as to determine the retracted position of the sidestand 40 as shown in FIG. 3.

Furthermore, the retracted position side stopper 39g is formed so that the sidestand 40 in the retracted position has an angle α of substantially 45 degrees with respect to a horizontal line, for example, a second horizontal line HL2.

In addition, the position of the spring lock portion 39a is determined so that with the sidestand 40 in the usage position as shown in FIG.2, at least part of the spring 41 (in this embodiment, most of the spring 41 including the entire coil portion 41a) overlaps the sidestand 40 as seen in the side view and further the position of the spring lock portion 39a is determined so that with the sidestand 40 in the usage position, the spring 41 passes forward of the second support bolt 47 as seen in the side view.

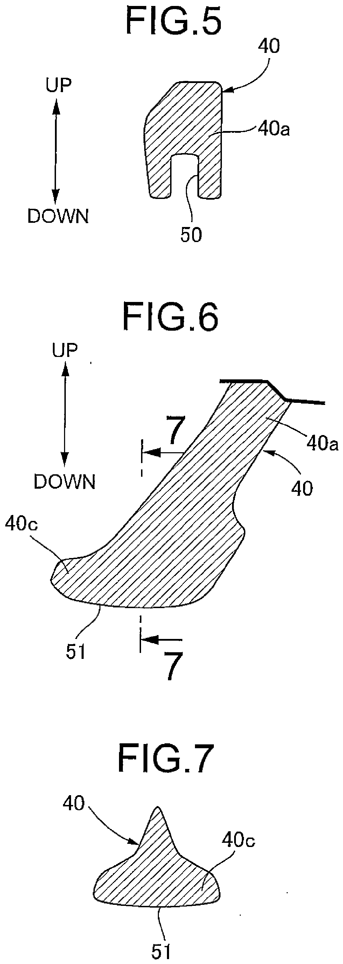

Referring also to FIG. 5, a lightening concave portion 50 is formed in a side surface of the stand bar 40a of the sidestand 40 which faces downward in the retracted position, and the lightening concave portion 50 extends long along the longitudinal direction of the stand bar 40a.

Referring also to FIGS. 6 and 7, a grounding surface 51 of the grounding portion 40c of the sidestand 40 is spherically formed.

Next, the operation of the first embodiment will be described. The front portion 24a of the swing arm 24 is located inward of the paired left and right pivot frames 17 in the vehicle width direction. The step holder 39 located on the left side of the body frame FA includes the sidestand support portion 39d for supporting the sidestand 40 rotatably, and the spring lock portion 39a located above the sidestand support portion 39d. The spring lock portion 39a is located in a position to overlap the pivot frame 17 as viewed from the rear in the vehicle longitudinal direction and overlap the swing arm 24 at least partially as seen in the side view. Therefore, when the spring lock portion 39a, provided on the left step holder 39 together with the sidestand support portion 39d, is made to overlap the swing arm 24 at least partially as seen in the side view, the space generated laterally to the front portion 24a of the swing arm 24 can be effectively used to arrange the spring lock portion 39a rearward of the pivot frame 17 and laterally to the swing arm 24. Thus, even though the step 38, the sidestand support portion 39d, and the spring lock portion 39a are arranged adjacently to each other as seen in the side view, the step 38 and, the sidestand support portion 39d and the spring lock portion 39a can be made not to interfere with each other, thereby preventing the space to arrange the step 38, the sidestand support portion 39d, and the spring lock portion 39a, namely the step holder 39, from being large.

In addition, the pivot frame 17 is formed in a manner to extend up and down with the intermediate portion thereof in the up-down direction curved rearward in a convex manner; the sidestand 40 is rotatably supported on the sidestand support portion 39d through the second support bolt 47; and the second support bolt 47 and the spring lock portion 39a are located on the portion of the left step holder 39 protruding rearward of the lower portion of the pivot frame 17 and located forward of the rear end 17a of the pivot frame 17 as seen in the side view. This prevents the step holder 39 from being large and makes it possible to use the space under the pivot frame 17 effectively.

In addition, the arm portion 39e extending upward from the sidestand support portion 39d is provided integrally on the left step holder 39; the spring lock portion 39a is located at the tip end portion of the arm portion 39e in a manner that at least part of the spring lock portion 39a is located above the upper end of the step 38 in the state of use; and the second support bolt 47 is located in the position corresponding to the lower end of the step 38 in the state of use as seen in the side view. Therefore, the second support bolt 47 and the spring lock portion 39a can be spaced from each other in the up-down direction without an increase in the weight of the step holder 39 and thereby the spring force of the spring 41 to rotate the sidestand 40 so as to move it into the retracted position can be increased to decrease the manipulation force and also the retracted position of the sidestand 40 can be maintained properly.

The posture of the sidestand 40 in the retracted position is set so as to make an angle of substantially 45 degrees with respect to the horizontal line, so the force to rotate and bias the sidestand 40 toward the opposite of the usage position can be increased and the retracted position of the sidestand 40 can be maintained more properly.

In addition, the position of the spring lock portion 39a is determined so that with the sidestand 40 in the usage position, at least part of the spring 41 overlaps the sidestand 40 as seen in the side view, and thus at least part of the spring 41 overlaps the sidestand 40 as seen in the side view with the sidestand 40 in the usage position so that the appearance can be improved and expansion of the spring 41 can be reduced to improve the durability of the spring 41.

In addition, the position of the spring lock portion 39a is determined so that with the sidestand 40 in the usage position, the spring 41 passes forward of the second support bolt 47 as seen in the side view, so the possibility that the sidestand 40 rotates and moves into the retracted position with the sidestand 40 in contact with the ground can be suppressed effectively.

In addition, the sidestand 40 includes the stand bar 40a and the grounding portion 40c, in which one end portion of the stand bar 40a is rotatably supported on the sidestand support portion 39d and the grounding portion 40c can contact the ground and is located at the opposite end portion of the stand bar 40a. In the stand bar 40a, the lightening concave portion 50 is formed in the side surface facing downward in the retracted position, so the weight of the sidestand 40 can be decreased and accumulation of mud, etc. in the lightening concave portion 50 can be prevented.

Furthermore, since the grounding surface 51 of the grounding portion 40c is spherically formed, stability upon contact with an uneven terrain can be ensured and also the invention can be applied to a two-wheeled motor vehicle which has a different parking angle in parking with the sidestand 40 in the usage position, so versatility is increased.

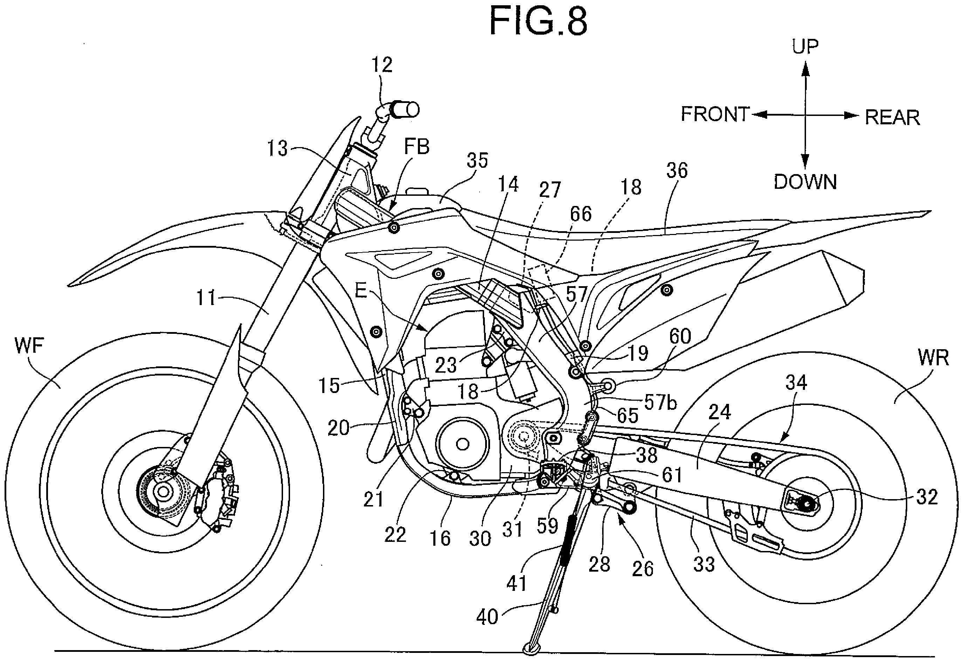

Next, a second embodiment of the present invention will be described referring to FIGS. 8 to 11. The same elements as in the first embodiment are designated by the same reference signs and their detailed description is omitted though the reference signs are shown in the figures.

First, as shown in FIG. 8, a body frame FB of a two-wheeled motor vehicle includes: a head pipe 13; a pair of left and right main frames 14 extending from the head pipe 13 downward toward the rear; a down frame 15 extending from the head pipe 13 downward toward the rear with a sharper angle than the main frames 14; a pair of left and right lower frames 16 connected to a lower end portion of the down frame 15 through a joint 20, the lower frames 16 extending rearward; a pair of left and right pivot frames 57 connecting rear end portions of the main frames 14 and rear end portions of the lower frames 16, the pivot frames 57 extending up and down; a pair of left and right seat rails 18 extending rearward from upper end portions of the pivot frames 57; and a pair of left and right rear frames 19 connecting intermediate portions in the up-down direction of the paired left and right pivot frames 57 and intermediate portions in the front-rear direction of the seat rails 18.

The pivot frames 57 are formed in a manner to have, in an intermediate portion thereof in the up-down direction, a curved portion 57b curved rearward in a convex manner, and extend up and down and a front portion of the rear frame 19 is connected to an upper portion of the curved portion 57b.

A front portion of an engine E is supported by the joint 20 through a first engine hanger 21, a lower portion of the engine E is supported by a second engine hanger 22 provided on the lower frames 16, and an upper portion of the engine E is supported by upper portions of the pivot frames 57 through a third engine hanger 23.

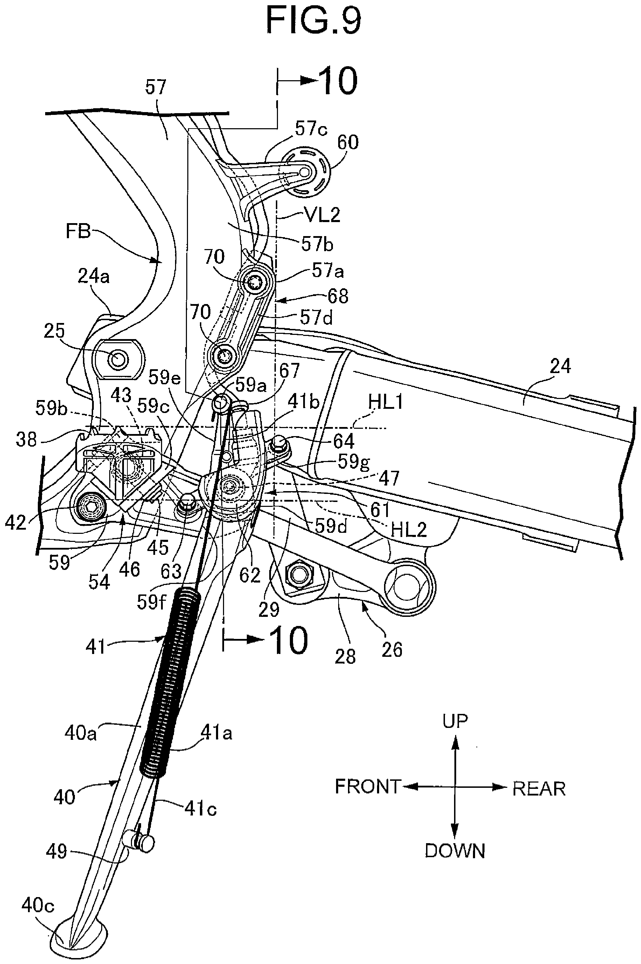

Referring also to FIG. 9, a front portion 24a of a swing arm 24 is supported on lower portions of the paired left and right pivot frames 57 through a pivot 25 in an up-down swingable manner, in which a rear end portion of the swing arm 24 pivotally supports the rear wheel WR.

A step holder 59 is abuttingly fixed on each of outer surfaces of the lower portions of the paired left and right pivot frames 57, in which the step holder 59 supports a step 38 and is located under the pivot 25. A sidestand 40 is provided on the left side of the body frame FB and a coil-shaped spring 41 is provided between the sidestand 40 and a spring lock portion 59a fixed on the body frame FB side.

As in the first embodiment, the step holder 59 located on the left side of the body frame FB has a step support portion 54 including a first support protruding portion 59b and a second support protruding portion 59c which are parallel to each other and protrude outward from the step holder 59, and the step 38 is supported on the step support portion 54 through a first support bolt 45 in a manner that the step 38 can rotate between a protruding position and a folded position.

The step holder 59 located on the left side of the body frame FB rotatably supports the sidestand 40 and a portion of the left step holder 59 which protrudes rearward of the lower portion of the pivot frame 57 includes a sidestand support portion 59d and the spring lock portion 59a, in which the sidestand support portion 59d rotatably supports a supported portion 40b of the sidestand 40 and the spring lock portion 59a is located above the sidestand support portion 59d.

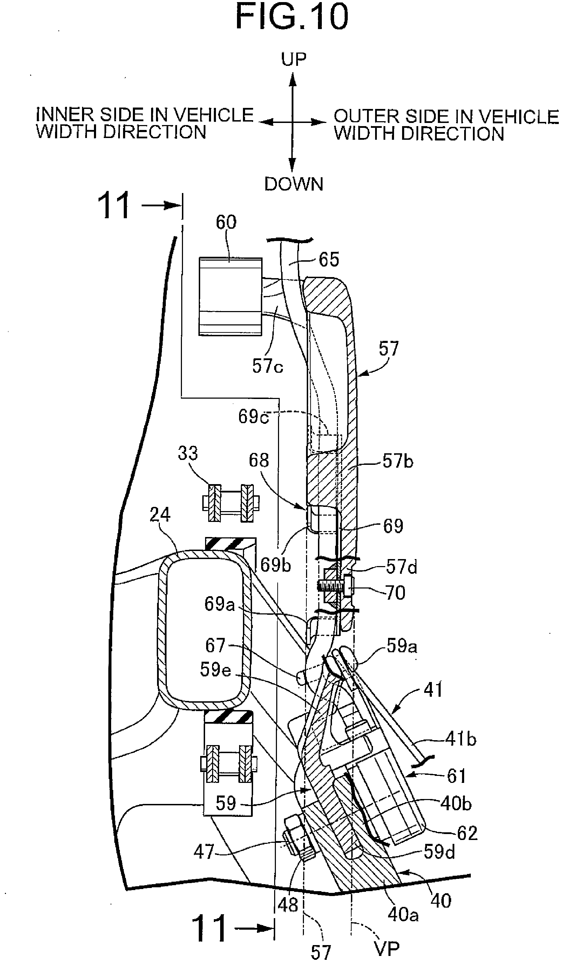

The spring lock portion 59a is located in a position to overlap the pivot frame 57 as viewed from the rear in the vehicle longitudinal direction as illustrated in FIG. 10, and overlap the swing arm 24 at least partially (entirely in the second embodiment) as seen in the side view as illustrated in FIG. 9. Furthermore, the spring lock portion 59a is at least partially (entirely in the second embodiment) located above the upper end of the step 38 in the state of use as shown in FIG. 9, and the spring lock portion 59a is entirely located above a first horizontal line HL1 which passes the upper end of the step 38 as seen in the side view.

The sidestand support portion 59d is formed in a flat plate shape protruding rearward under the spring lock portion 59a. Also, an arm portion 59e extending upward from the sidestand support portion 59d is provided integrally on the left step holder 59 and the spring lock portion 59a is located at the tip end portion of the arm portion 59e.

The bifurcated supported portion 40b, provided at one end portion of the stand bar 40a of the sidestand 40, is rotatably supported on the sidestand support portion 59d through a second support bolt 47 and a nut 48.

Furthermore, the second support bolt 47 and the spring lock portion 59a are located forward of a rear end 57a of the pivot frame 57 as seen in the side view. In other words, the sidestand support portion 59d and the spring lock portion 59a are located forward of a second vertical line VL2 passing the rear end 57a of the pivot frame 57 as seen in the side view. Also, as illustrated in FIG. 9, the second support bolt 47 is located in a position corresponding to the lower end of the step 38 in the state of use as seen in the side view and a second horizontal line HL2 passing the lower end of the step 38 as seen in the side view passes the second support bolt 47.

The tip end portion of a linear first coupling portion 41b of the spring 41 is locked onto the spring lock portion 59a and the tip end portion of a second coupling portion 41c is locked onto a lock shaft 49 provided near the grounding portion 40c of the stand bar 40a.

In the vicinity of the sidestand support portion 59d, the left step holder 59 includes a usage position side stopper 59f and a retracted position side stopper 59g, in which the usage position side stopper 59f abuts against one end portion of the stand bar 40a with the sidestand 40 in the usage position so as to determine the usage position of the sidestand 40 as shown in FIG. 9, and the retracted position side stopper 59g abuts against the one end portion of the stand bar 40a with the sidestand 40 in the retracted position so as to determine the retracted position of the sidestand 40.

The position of the spring lock portion 59a is determined so that with the sidestand 40 in the usage position as shown in FIG.9, at least part of the spring 41 (in this embodiment, most of the first coupling portion 41b and most of the coil portion 41a) overlaps the sidestand 40 as seen in the side view and further the position of the spring lock portion 59a is determined so that with the sidestand 40 in the usage position, the spring 41 passes forward of the second support bolt 47 as seen in the side view.

In addition, a roller 60 is provided above the spring lock portion 59a so as to contact an endless chain 33 from above when the two-wheeled motor vehicle is nose-lifted, thereby preventing the chain 33 from interfering with the vehicle body, in which the chain 33 is located between an output shaft 31 of a transmission and an axle 32 of a rear wheel WR. The roller 60 is pivotally supported on a tip end portion (rear end portion in the vehicle longitudinal direction) of a support arm portion 57c which is connected integrally with an upper portion of the curved portion 57b of the pivot frame 57 and extends rearward.

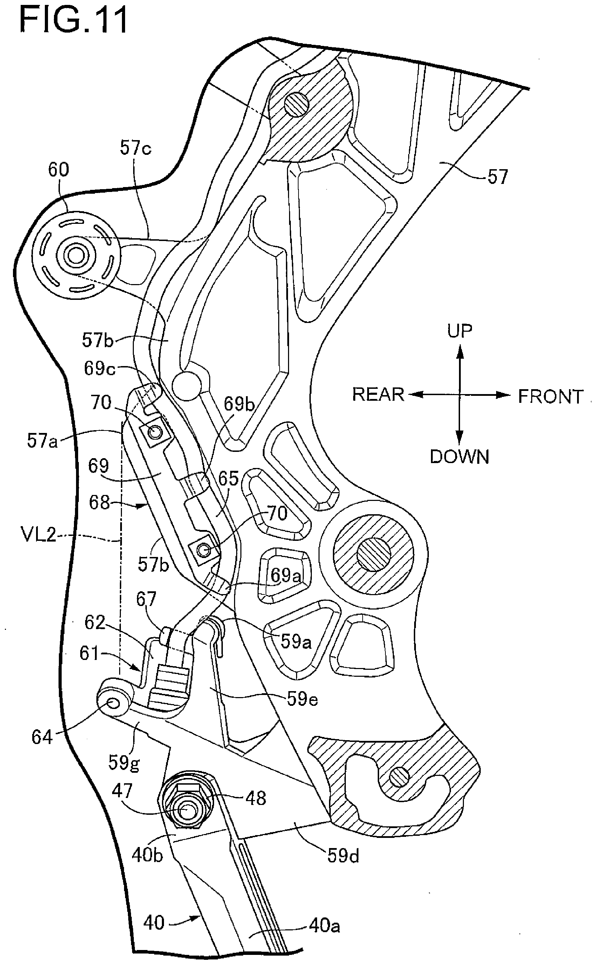

Referring also to FIG. 11, a sidestand switch 61 which changes a switching mode between a state with the sidestand 40 placed in the usage position and a state with the sidestand 40 placed in the retracted position is attached to the left step holder 59.

In this embodiment, the sidestand switch 61 is a rotary switch which is coaxial with an axis of rotation of the sidestand 40, namely the second support bolt 47. A case 62 of the sidestand switch 61 is fastened to the step holder 59 with a third bolt 63 located forward of the sidestand support portion 59d of the left step holder 59 and also fastened to the retracted position side stopper 59g with a fourth bolt 64 located rearward and upward of the sidestand support portion 59d.

Furthermore, part of the sidestand switch 61 and the spring lock portion 59a (in the second embodiment, part of the sidestand switch 61 and the spring lock portion 59a) is at least partially located in a position to overlap the curved portion 57b of the pivot frame 57 when viewed from above, and as shown in FIG. 10, the positions of the sidestand switch 61 and the spring lock portion 59a relative to the curved portion 57b in the vehicle width direction are set so that a vertical plane VP passing an outer surface of the curved portion 57b in the vehicle width direction passes the sidestand switch 61 and the spring lock portion 59a.

A conductor wire 65 is led from the sidestand switch 61. Rotational position information on the sidestand 40 which is obtained from the sidestand switch 61 is sent through the conductor wire 65 to a control unit 66 which is mounted on the two-wheeled motor vehicle in a manner to be located under a riding seat 36 and above the pivot frame 57 as seen in the side view as shown in FIG. 8. The control unit 66 controls the two-wheeled motor vehicle so that the two-wheeled motor vehicle cannot travel, when the sidestand 40 is in the usage position in contact with the ground.

Conductor wire guide portions 67 and 68 which arrange the conductor wire 65 led from the sidestand switch 61 inward of the spring lock portion 59a in the vehicle width direction are provided on at least one of the step holder 59 and the pivot frame 57. In the second embodiment, the first conductor wire guide portion 67 is provided on the step holder 59 and the second conductor wire guide portion 68 is provided on the pivot frame 57.

The first conductor wire guide portion 67 is connected integrally with the spring lock portion 59a of the step holder 59 and is formed in a substantially C-shape so that the conductor wire 65 extending upward from the sidestand switch 61 is held inward of the spring lock portion 59a in the vehicle width direction.

The second conductor wire guide portion 68 has a guide member 69 fastened to an inner surface of a support plate portion 57d in the vehicle width direction, in which the support plate portion 57d is connected integrally with the lower portion of the curved portion 57b of the pivot frame 57 and protrudes rearward in the vehicle longitudinal direction. In this embodiment, a rear end of the support plate portion 57d is the rear end 57a of the pivot frame 57.

The guide member 69 extends long in the up-down direction so as to correspond to the support plate portion 57d. Retaining portions 69a, 69b, and 69c which are formed in a substantially C-shape are formed integrally on the lower end portion, intermediate portion in the up-down direction and upper end portion of the guide member 69 so as to hold the conductor wire 65 inward of the guide member 69 in the vehicle width direction.

Furthermore, the guide member 69 is fastened to the support plate portion 57d with a pair of screw members 70 provided between the retaining portions 69a and 69b and between the retaining portions 69b and 69c respectively.

The second conductor wire guide portion 68 guides the conductor wire 65 so that the conductor wire 65 extends in the up-down direction inward of the curved portion 57b of the pivot frame 57 in the vehicle width direction. The conductor wire 65 extending from the second conductor wire guide portion 68 toward the control unit 66 is arranged in the up-down direction outward of the roller 60 in the vehicle width direction and inward of the pivot frame 57 in the vehicle width direction, thereby preventing the conductor wire 65 from touching the chain 33 or the occupant during travel of the two-wheeled motor vehicle so as to become worn.

According to the second embodiment, not only the same effects as achieved by the first embodiment are achieved, but also it is easy to arrange the conductor wire 65 extending from the sidestand switch 61, so as to make the conductor wire 65 pass inward of the spring lock portion 59a in the vehicle width direction and inward of the pivot frame 57 in the vehicle width direction, because the sidestand switch 61 for changing the switching mode between the state with the sidestand 40 in the usage position and the state with the sidestand 40 in the retracted position is attached to the step holder 59, and the first and second conductor wire guide portions 67 and 68 for arranging the conductor wire 65 connected with the sidestand switch 61 inward of the spring lock portion 59a in the vehicle width direction are provided on at least one of the step holder 59 and the pivot frame 57 (both of them in the second embodiment).

Furthermore, the pivot frame 57 is formed in a manner to extends up and down and have, in the intermediate portion thereof in the up-down direction, the curved portion 57b curved rearward in a convex manner, and the sidestand switch 61 and the spring lock portion 59a are located in a position to overlap the curved portion 57b at least partially when viewed from above, so the sidestand switch 61 and the spring lock portion 59a can be placed around the pivot frame 57 in a compact manner.

The embodiments of the present invention have been so far explained. However, the present invention is not limited to the above embodiments but various design modifications may be made without departing from the scope of the present invention as defined in the appended claims.

### REFERENCE SIGNS LIST

- 12: Steering handlebar
- 13: Head pipe
- 14: Main frame
- 17, 57: Pivot frame
- 17a, 57a: Rear end of pivot frame
- 24: Swing arm
- 24a: Front portion of swing arm
- 25: Pivot
- 38: Step
- 39, 59: Step holder
- 39a, 59a: Spring lock portion
- 39d, 59d: Sidestand support portion
- 39e, 59e: Arm portion
- 40: Sidestand
- 40a: Stand bar
- 40c: Grounding portion
- 41: Spring
- 47: Second support bolt as a support shaft
- 50: Lightening concave portion
- 51: Grounding surface
- 57b: Curved portion
- 61: Sidestand switch
- 65: Conductor wire
- 67, 68: Conductor wire guide portion
- FA, FB: Body frame
- WR: Rear wheel

## Claims

1. A two-wheeled motor vehicle with a sidestand structure, in which part of a body frame (FA, FB) is configured with: a head pipe (13) steerably supporting a steering handlebar (12); a pair of left and right main frames (14) extending rearward from the head pipe (13); and a pair of left and right pivot frames (17, 57) connected to rear end portions of the main frames (14), the pivot frames (17, 57) extending in an up-down direction, a front portion (24a) of a swing arm (24) is located inward of the paired left and right pivot frames (17, 57) in a vehicle width direction and swingably supported through a pivot (25) on lower portions of the left and right pivot frames (17, 57), a rear end portion of the swing arm (24) pivotally supporting a rear wheel (WR), a step holder (39, 59) located under the pivot (25) is abuttingly fixed on an outer surface of the lower portion of each of the paired left and right pivot frames (17, 57) while supporting a step (38), the step (38) protruding outward from the step holder (39, 59) in a state of use, a sidestand (40) is located either left or right of the body frame (FA, FB), the sidestand (40) being rotatable between a usage position enabling contact of the sidestand (40) with a ground and a retracted position where the sidestand (40) is swung up rearward from the usage position in a vehicle longitudinal direction so as to be retracted, and a coil-shaped spring (41) is provided between the sidestand (40) and a spring lock portion (39a, 59a) fixedly located on the body frame (FA, FB) side, and the step holder (39, 59) located either left or right of the body frame (FA, FB) has a sidestand support portion (39d, 59d) rotatably supporting the sidestand (40) and the spring lock portion (39a, 59a) located above the sidestand support portion (39d, 59d), **characterised in that**
the spring lock portion (39a, 59a) is located in a position to overlap the pivot frame (17, 57) when viewed from back in the vehicle longitudinal direction and at least partially overlap the swing arm (24) as seen in a side view.

2. The two-wheeled motor vehicle according to Claim 1,
wherein the pivot frame (17, 57) is formed to extend up and down with an intermediate portion thereof in an up-down direction curved rearward in a convex manner,
the sidestand (40) is rotatably supported on the sidestand support portion (39d, 59d) through a support shaft (47), and
the support shaft (47) and the spring lock portion (39a, 59a) are located on a portion of the step holder (39, 59) protruding rearward of the lower portion of the pivot frame (17, 57) and located forward of a rear end (17a, 57a) of the pivot frame (17, 57) as seen in the side view.

3. The two-wheeled motor vehicle according to Claim 2,
wherein the step holder (39, 59) integrally includes an arm portion (39e, 59e) extending upward from the sidestand support portion (39d, 59d),
the spring lock portion (39a, 59a) is located at a tip end portion of the arm portion (39e, 59e) so that at least part of the spring lock portion (39a, 59a) is located above an upper end of the step (38) in the state of use, and
the support shaft (47) is located in a position corresponding to a lower end of the step (38) in the state of use as seen in the side view.

4. The two-wheeled motor vehicle according to Claim 3,
wherein a posture of the sidestand (40) in the retracted position is set so as to make an angle of substantially 45 degrees with respect to a horizontal line.

5. The two-wheeled motor vehicle according to Claim 4,
wherein a position of the spring lock portion (39a, 59a) is determined so that with the sidestand (40) in the usage position, at least part of the spring (41) overlaps the sidestand (40) as seen in the side view.

6. The two-wheeled motor vehicle according to Claim 5,
wherein the position of the spring lock portion (39a, 59a) is determined so that with the sidestand (40) in the usage position, the spring (41) passes forward of the support shaft (47) as seen in the side view.

7. The two-wheeled motor vehicle according to any one of Claims 1 to 6,
wherein the sidestand (40) includes a stand bar (40a) and a grounding portion (40c), the stand bar (40a) having one end portion rotatably supported on the sidestand support portion (39d, 59d), the grounding portion (40c) capable of contacting a ground and being located at an opposite end portion of the stand bar (40a), and
a lightening concave portion (50) is formed in a side surface of the stand bar (40a) facing downward in the retracted position.

8. The two-wheeled motor vehicle according to Claim 7,
wherein a grounding surface (51) of the grounding portion (40c) is spherically formed.

9. The two-wheeled motor vehicle according to Claim 1,
wherein the step holder (59) includes a sidestand switch (61) attached thereto, the sidestand switch (61) changing a switching mode between a state with the sidestand (40) placed in the usage position and a state with the sidestand (40) placed in the retracted position, and
at least one of the step holder (59) and the pivot frame (57) includes a conductor wire guide portion (67, 68) arranging a conductor wire (65) connected to the sidestand switch (61) inward of the spring lock portion (59a) in the vehicle width direction.

10. The two-wheeled motor vehicle according to Claim 9,
wherein the pivot frame (57) is formed to extend up and down and have, in an intermediate portion thereof in an up-down direction, a curved portion (57b) curved rearward in a convex manner, and
the sidestand switch (61) and the spring lock portion (59a) are located in a position to overlap the curved portion (57b) at least partially when viewed from above.

## Patentansprüche

1. Zweirädriges Motorfahrzeug mit einer Seitenständerkonstruktion, bei dem ein Teil des Fahrzeugrahmens (FA, FB) konfiguriert ist mit: einem Scheinwerfer (13), der steuerbar einen Lenker (12) trägt; ein Paar linker und rechter Hauptrahmen (14), die sich nach hinten von einem Kopfrohr (13) erstrecken; und ein Paar linker und rechter Drehrahmen (17, 57), die mit hinteren Endbereichen der Hauptrahmen (14) verbunden sind, wobei die Drehrahmen (17, 57) sich in Oben-Unten-Richtung erstrecken, wobei ein Frontbereich (24 A) eines Schwingenarms (24) einwärts des Paars linker und rechter Drehrahmen (17, 57) in der Fahrzeugbreitenrichtung angeordnet ist und schwenkbar durch ein Drehgelenk (25) in unteren Bereichen der linken und rechten Drehrahmen (17, 57) getragen wird, ein hinterer Endbereich des Schwingenarms (24) drehbar ein Hinterrad (WR) trägt, ein Fußrastenhalter (39, 59) unter dem Drehgelenk (25) anliegend an einer äußeren Fläche des unteren Bereichs jedes des Paars linker und rechter Drehrahmen (17, 57) fixiert ist, wobei er eine Fußraste (38) trägt, wobei die Fußraste (38) in einem Zustand der Benutzung nach außen von dem Fußrastenhalter (39, 59) vorsteht, ein Seitenständer (40) entweder links oder rechts an dem Fahrzeugrahmen (FA, FB) angeordnet ist, wobei der Seitenständer (40) zwischen einem Zustand der Benutzung, die einen Kontakt des Seitenständers (40) mit einem Untergrund ermöglicht, und einer zurückgezogenen Position drehbar ist, in der der Seitenständer (40) nach oben hinten aus dem Zustand der Benutzung in einer Fahrzeuglängsrichtung geschwenkt ist um zurückgezogen zu sein, und eine spulenförmige Feder (41) zwischen dem Seitenständer (40) und einem Federsperrabschnitt (39a, 59a) fix an der Fahrzeugrahmenseite (FA, FB) angeordnet ist, und
der Fußrastenhalter (39, 59), der entweder links oder rechts an dem Fahrzeugrahmen (FA, FB) angeordnet ist, einen Seitenständerstützabschnitt (39d, 59d) hat, der drehbar den Seitenständer (40) und den Federsperrabschnitt (39a, 59a) trägt, der oberhalb des Seitenständerstützabschnitts (39d, 59d) angeordnet ist,
wobei der Federsperrabschnitt (39a, 59a) in einer Position angeordnet ist, in der er den Drehrahmen (17,57) überlappt, wenn er in der Fahrzeuglängsrichtung von hinten betrachtet wird, und wenigstens teilweise den Schwingenarm (24) überlappt, wenn er von einer Seitenansicht betrachtet wird.

2. Zweirädriges Motorfahrzeug gemäß Anspruch 1,
wobei der Drehrahmen (17, 57) ausgebildet ist sich nach oben und unten zu erstrecken, mit seinem Mittelbereich in einer Oben-Unten-Richtung nach hinten in einer konvexen Weise gekrümmt,
der Seitenständer (40) drehbar an dem Seitenständerstützabschnitt (39d, 59d) durch eine Stützwelle (47) getragen wird, und
die Stützwelle (47) und der Federsperrabschnitt (39a, 59a) an einem Abschnitt des Fußrastenhalters (39, 59) angeordnet sind, der nach hinten von dem unteren Bereich des Drehrahmens (17, 57) vorsteht, und vor einem hinteren Ende (17aA, 57a) des Drehrahmens (17, 57) angeordnet sind, in der Seitenansicht betrachtet.

3. Zweirädriges Motorfahrzeug gemäß Anspruch 2,
wobei der Fußrastenhalter (39, 59) einstückig einen Armabschnitt (39e, 59e) aufweist, der sich nach oben von dem Seitenständerstützabschnitt (39d, 59d) erstreckt,
der Federsperrabschnitt (39a, 59a) in einem Spitzenbereich des Armabschnitts (39e, 59e) angeordnet ist, sodass wenigstens ein Teil des Federsperrabschnitts (39a, 59a) oberhalb eines oberen Endes der Fußraste (38) in Zustand der Nutzung angeordnet ist, und
die Stützwelle (47) in einer Position angeordnet ist, die einem unteren Ende der Fußraste (38) in einem Zustand der Nutzung entspricht, in der Seitenansicht betrachtet.

4. Zweirädriges Motorfahrzeug gemäß Anspruch 3,
wobei eine Stellung des Seitenständers (40) in seiner zurückgezogenen Position so eingestellt ist, dass er einen Winkel von im wesentlichen 45° in Bezug auf eine horizontale Linie einschließt.

5. Zweirädriges Motorfahrzeug gemäß Anspruch 4,
wobei eine Position des Federsperrabschnitts (39a, 59a) so bestimmt ist, dass mit dem Seitenständer (40) in seinem Zustand der Nutzung wenigstens ein Teil der Feder (41) den Seitenständer (40) überlappt, in der Seitenansicht betrachtet.

6. Zweirädriges Motorfahrzeug gemäß Anspruch 5,
wobei die Position des Federsperrabschnitts (39a, 59a) so festgelegt ist, dass mit dem Seitenständer (40) in dem Zustand der Nutzung die Feder (41) vor der Stützwelle (47) verläuft, in der Seitenansicht betrachtet.

7. Zweirädriges Motorfahrzeug gemäß irgendeinem der Ansprüche 1 bis 6,
wobei der Seitenständer (40) eine Ständerstrebe (40a) aufweist und einen Bodenbereich (40c), wobei die Ständerstrebe (40a) einen Endbereich hat, der drehbar von dem Seitenständerstützabschnitt (39d, 59d) gestützt wird, der Bodenbereich (40c) in der Lage ist, den Boden zu berühren und an einem entgegengesetzten Endbereich der Ständerstrebe (40a) angeordnet ist, und
ein erleichternder, konkave Bereich (50) an einer Seitenoberfläche der Ständerstrebe (40a) gebildet ist, die nach unten in der zurückgezogenen Position orientiert ist.

8. Zweirädriges Motorfahrzeug gemäß Anspruch 7,
wobei eine Bodenfläche (51) des Bodenbereichs (40 C) sphärisch geformt ist.

9. Zweirädriges Motorfahrzeug gemäß Anspruch 1,
wobei der Fußrastenhalter (59) einen Seitenständersschalter (61) aufweist, der daran befestigt ist, wobei der Seitenständersschalter (61) einen Schaltbetrieb zwischen einem Zustand, in dem der Seitenständer (40) in dem Zustand der Nutzung platziert ist und einem Zustand, in dem der Seitenständer (40) in der zurückgezogenen Position platziert ist ändert, und
wenigstens der Fußrastenhalter (59) oder der Drehrahmen (57) eine Leitungsführungsabschnitt (67, 68) aufweist, der ein Leitungskabel (65), das mit dem Seitenständerschalter (61) verbunden ist, einwärts des Federsperrabschnitts (59a) in der Fahrzeugbreitenrichtung arrangiert.

10. Zweirädriges Motorfahrzeug gemäß Anspruch 9,
wobei der Drehrahmen (57) ausgebildet ist sich nach oben und unten zu erstrecken und in einem Zwischenbereich in einer Oben-Unten-Richtung einen gekrümmten Abschnitt (57b) hat, der nach hinten in einer konvexen Weise gekrümmt ist, und
der Seitenständerschalter (61) und der Federsperrabschnitt (59a) in einer Position angeordnet sind, die den gekrümmten Abschnitt (57b) wenigstens teilweise überlappt, in einer Ansicht von oben.

## Revendications

1. Véhicule motorisé à deux roues doté d'une structure de béquille latérale, dans lequel une partie d'un cadre de caisse (FA, FB) est configurée avec : une colonne de direction (13) supportant de façon dirigeable un guidon de direction (12) ; une paire de cadres principaux gauche et droit (14) s'étendant vers l'arrière depuis la colonne de direction (13) ; et une paire de cadres pivotants gauche et droit (17, 57) raccordés à des portions d'extrémité arrière des cadres principaux (14), les cadres pivotants (17,57) s'étendant dans une direction de haut en bas, une portion avant (24a) d'un bras oscillant (24) est située vers l'intérieur des cadres pivotants droit gauche et droit appariés (17, 57) dans une direction de largeur du véhicule et supportée en oscillation par le biais d'un pivot (25) sur des portions inférieures des cadres pivotants gauche et droit (17, 57), une portion d'extrémité arrière du bras oscillant (24) supportant en pivotement une roue arrière (WR), un dispositif de maintien de marchepied (39, 59) situé sous le pivot (25) est fixé en butée sur une surface extérieure de la portion inférieure de chacun des cadres pivotants gauche et droit appariés (17, 57) tout en supportant un marchepied (38), le marchepied (38) faisant saillie vers l'extérieur depuis le dispositif de maintien de marchepied (39, 59) dans un état d'utilisation, une béquille latérale (40) est située à gauche ou à droite du cadre de caisse (FA, FB), la béquille latérale (40) pouvant tourner entre une position d'usage permettant un contact de la béquille latérale (40) avec un sol et une position rétractée où la béquille latérale (40) est relevée vers l'arrière depuis la position d'usage dans une direction longitudinale de véhicule de façon à être rétractée, et un ressort hélicoïdal (41) est prévu entre la béquille latérale (40) et une portion de verrouillage à ressort (39a, 59a) située à demeure sur le côté de cadre de caisse (FA, FB),
et
le dispositif de maintien de marchepied (39, 59) situé à gauche ou à droite du cadre de caisse (FA, FB) a une portion de support de béquille latérale (39d, 59d) supportant en rotation la béquille latérale (40) et la portion de verrouillage à ressort (39a, 59a) située au-dessus de la portion de support de béquille latérale (39d, 59d), **caractérisé en ce que**
la portion de verrouillage à ressort (39a, 59a) est située dans une position pour chevaucher le cadre pivotant (17, 57) lorsqu'elle est vue depuis l'arrière dans la direction longitudinale de véhicule et pour chevaucher au moins partiellement le bras oscillant (24) dans une vue de côté.

2. Véhicule motorisé à deux roues selon la revendication 1,
dans lequel le cadre pivotant (17, 57) est formé pour s'étendre en haut et en bas avec une portion intermédiaire de celui-ci dans une direction de haut en bas incurvée vers l'arrière de manière convexe,
la béquille latérale (40) est supportée en rotation sur la portion de support de béquille latérale (39d, 59d) par le biais d'un arbre de support (47), et
l'arbre de support (47) et la portion de verrouillage à ressort (39a, 59a) sont situés sur une portion du dispositif de maintien de marchepied (39, 59) faisant saillie vers l'arrière de la portion inférieure du cadre pivotant (17, 57) et situés vers l'avant d'une extrémité arrière (17a, 57a) du cadre pivotant (17, 57) dans la vue de côté.

3. Véhicule motorisé à deux roues selon la revendication 2,
dans lequel le dispositif de maintien de marchepied (39, 59) comporte intégralement une portion de bras (39e, 59e) s'étendant vers le haut depuis la portion de support de béquille latérale (39d, 59d),
la portion de verrouillage à ressort (39a, 59a) est située au niveau d'une portion d'extrémité de bout de la portion de bras (39e, 59e) de sorte qu'au moins une partie de la portion de verrouillage à ressort (39a, 59a) soit située au-dessus d'une extrémité supérieure du marchepied (38) dans l'état d'utilisation, et
l'arbre de support (47) est situé dans une position correspondant à une extrémité inférieure du marchepied (38) dans l'état d'utilisation dans la vue de côté.

4. Véhicule motorisé à deux roues selon la revendication 3,
dans lequel une posture de la béquille latérale (40) dans la position rétractée est établie de façon à former un angle de sensiblement 45 degrés par rapport à une ligne horizontale.

5. Véhicule motorisé à deux roues selon la revendication 4,
dans lequel une position de la portion de verrouillage à ressort (39a, 59a) est déterminée de sorte qu'avec la béquille latérale (40) dans la position d'usage, au moins une partie du ressort (41) chevauche la béquille latérale (40) dans la vue de côté.

6. Véhicule motorisé à deux roues selon la revendication 5,
dans lequel la position de la portion de verrouillage à ressort (39a, 59a) est déterminée de sorte qu'avec la béquille latérale (40) dans la position d'usage, le ressort (41) passe vers l'avant de l'arbre de support (47) dans la vue de côté.

7. Véhicule motorisé à deux roues selon l'une quelconque des revendications 1 à 6,
dans lequel la béquille latérale (40) comporte une barre de béquille (40a) et une portion de contact avec le sol (40c), la barre de béquille (40a) ayant une portion d'extrémité supportée en rotation sur la portion de support de béquille latérale (39d, 59d), la portion de contact avec le sol (40c) étant capable de venir en contact avec un sol et étant située au niveau d'une portion d'extrémité opposée de la barre de béquille (40a), et
une portion concave d'allégement (50) est formée dans une surface de côté de la barre de béquille (40a) en regard vers le bas dans la position rétractée.

8. Véhicule motorisé à deux roues selon la revendication 7,
dans lequel une surface de contact avec le sol (51) de la portion de contact avec le sol (40c) est formée de façon sphérique.

9. Véhicule motorisé à deux roues selon la revendication 1,
dans lequel le dispositif de maintien de marchepied (59) comporte un commutateur de béquille latérale (61) fixé à celui-ci, le commutateur de béquille latérale (61) changeant un mode de commutation entre un état où la béquille latérale (40) est placée dans la position d'usage et un état où la béquille latérale (40) est placée dans la position rétractée, et
au moins l'un du dispositif de maintien de marchepied (59) et du cadre pivotant (57) comporte une portion de guidage de fil conducteur (67, 68) agençant un fil conducteur (65) connecté au commutateur de béquille latérale (61) vers l'intérieur de la portion de verrouillage à ressort (59a) dans la direction de largeur du véhicule.

10. Véhicule motorisé à deux roues selon la revendication 9,
dans lequel le cadre pivotant (57) est formé pour s'étendre en haut et en bas et a, dans une portion intermédiaire de celui-ci dans une direction de haut en bas, une portion incurvée (57b) qui est incurvée vers l'arrière de manière convexe, et
le commutateur de béquille latérale (61) et la portion de verrouillage à ressort (59a) sont situés dans une position pour chevaucher la portion incurvée (57b) au moins partiellement en vue de dessus.
